# EUROPEAN PATENT APPLICATION

(11) **EP 4 002 609 A1**
(43) Date of publication of application: **25.05.2022**
(21) Application number: 20208950.4
(22) Date of filing: 20.11.2020
(51) Int. Cl.: H01S 3/081, H01S 3/05, H01S 3/0941, H01S 3/109, H01S 3/08, H01S 3/16

(54) **SOLID-STATE LASER SYSTEM**

(71) Applicant: Advalight APS, 2750 Ballerup (DK)
(72) Inventor: THORHAUGE, Morten, 2750 Ballerup (DK); MORTENSEN, Jesper, 2750 Ballerup (DK); BUCH, Mikkel Aarup, 2750 Ballerup (DK)
(74) Representative: Guardian IP Consulting I/S

(57) **Abstract**

One aspect of the present disclosure relates to a solid-state laser system, comprising a first at least partially reflective surface; a second at least partially reflective surface, the first and second at least partially reflective surfaces being configured to define opposite ends of a resonant cavity; a solid-state gain material positioned inside the resonant cavity so as to generate at least a primary optical field inside the resonant cavity between the first and second at least partially reflective surfaces; a curved refractive surface positioned inside the resonant cavity so as to cause at least a part of the primary optical field between the first and second at least partially reflective surfaces to propagate through the curved refractive surface.

## Description

### Technical Field

The present disclosure relates to a solid-state laser system, in particular an end-pumped solid-state laser system, and to a method for manufacturing a solid-state laser system.

### Background

Solid-state laser systems, are widely used for numerous applications, e.g. as a laser source in medical laser systems for use in various medical application e.g. for surgery or therapy of various diseases. Medical laser systems are also used for cosmetic treatment of skin conditions.

Optically pumped solid-state laser systems typically include a gain medium inside a resonant cavity defined by a first mirror and a second mirror, one of which operable as an output coupler.

A common problem with optically pumped solid-state lasers is related to the fact that, during operation of such a laser system, thermal gradients are build up inside the gain medium which, in turn, cause the gain medium to act as a lens and affect the resonant optical field in the cavity.

The paper "Multielement stable resonators containing a variable lens" by V. Magni, J. Opt. Soc. Am. A/Vol. 4, No. 10/October 1987, describes a unified formulation for the analysis of linear stable resonator containing a lens of variable focal length, which represents the rod of a solid-state laser, and other intra-cavity optical systems.

In order to provide stable resonators, folded cavity configurations may be used where the cavity optical axis is folded into an x- or z-shape. To this end, appropriate folding mirrors may be included. The cavity configuration, e.g. the lengths of the cavity arms and the properties of the cavity mirrors, should preferably be designed so as to arrive at a cavity that is stable in respect of variations in the precise placement of the optical components as well as in respect of variations in operational parameters of the laser system, e.g. in respect of variations in pump current, temperature, etc.

In many situations it may be challenging to arrive at a stable configuration. For example, in some situations, obtaining a stable cavity design may favor a compact cavity with small distances between the optical elements. However, such compact designs may be difficult to achieve due to geometric constraints of the folded configurations and due to resulting large incident angles on the folding mirrors that may cause undesirable optical effects, e.g. astigmatism.

It is thus desirable to provide a laser system that avoids, or at least reduces at least some of the above problems. It is further desirable to provide a laser system that can be made compact.

### Summary

According to one aspect, disclosed herein are embodiments of a solid-state laser system, comprising:
- a first at least partially reflective surface;
- a second at least partially reflective surface, the first and second at least partially reflective surfaces being configured to define opposite ends of a resonant cavity;
- a solid-state gain material positioned inside the resonant cavity so as to generate at least a primary optical field inside the resonant cavity between the first and second at least partially reflective surfaces;
- an intra-cavity curved, in particular concave or convex, refractive surface positioned inside the resonant cavity so as to cause at least a part of the resonant primary optical field between the first and second at least partially reflective surfaces to propagate through the curved refractive surface.

It has turned out that stable cavity designs may be obtained in many situations, even for compact cavities, when the resonant cavity comprises an optical element having an intra-cavity curved (concave or convex) refractive surface, in particular a surface operable as a lens. The intra-cavity curved refractive surface may be a surface of a passive optical element or a surface of an active optical element, e.g. of a frequency-converting element.

The first and second at least partially reflective surfaces and the curved refractive surface may all be surfaces of respective optical elements, i.e. the laser system may comprise:
- a first at least partially reflective element defining the first at least partially reflective surface,
- a second partially reflective element, separate from the first partially reflective element and defining the second at least partially reflective surface, and
- an optical element, in particular a lens, defining the intra-cavity curved refractive surface.

The optical element defining the curved refractive surface may be an intra-cavity optical element separate from each of the first and second partially reflective elements. In some embodiments the optical element defining the intra-cavity curved refractive surface may be an active optical element, e.g. the gain material or a frequency-converting element.

In some embodiments, the intra-cavity curved refractive surface and the second at least partially reflective surface may be integrated into the same monolithic optical element. The monolithic optical element is thus operable as a lens and as a mirror.

The curved refractive surface is preferably anti-reflection coated with an anti-reflective coating that is anti-reflective at least at a primary wavelength of the resonant primary optical field and, optionally at one or more frequency-converted wavelengths of one or more frequency-converted optical fields.

In some embodiments, the curved refractive surface is configured to compensate for a thermal focusing of the primary optical field by the gain material during operation of the laser system.

The second at least partially reflective surface may be configured to operate as an output coupler of the resonant cavity, i.e. it may be partially reflective and partially transmissive. In some embodiments, the second at least partially reflective surface is partially transmissive and partially reflective at a primary wavelength of a primary optical field which is generated by the gain medium of the laser system. In embodiments where the laser system comprises an intra-cavity frequency-converting element, the second at least partially reflective surface may be highly reflective at the primary wavelength of the primary optical field and the second at least partially reflective surface may be transmissive or partially reflective and partially transmissive at a frequency-converted wavelength of a frequency-converted optical field generated by the frequency-converting element. Accordingly, the second at least partially reflective element allows a portion of the primary optical field or a at least a portion of a frequency-converted optical field, as the case may be, to exit the resonant cavity through the second partially reflective surface. The second at least partially reflective surface may be a surface of an output coupler, e.g. of a semi-transparent dielectric mirror. The second at least partially reflective surface may be coated with an at least partially reflective coating, such as with a partially reflective coating. The second at least partially reflective surface may be coated or otherwise configured to cause a major portion of the primary optical field to be reflected and a minor portion of the primary optical field to exit the resonant cavity. In some embodiments, the second at least partially reflective surface may be coated or otherwise configured to cause a major portion, or even substantially all, of the primary optical field to be reflected and at least a major portion of a frequency-converted optical field to exit the resonant cavity. The second at least partially reflective surface may be a curved (e.g. convex or concave) surface or, preferably, a planar surface.

In some embodiments, the first at least partially reflective surface is coated with a coating that is anti-reflective at a pump wavelength of the pump beam for optically pumping the resonant cavity, and reflective at a primary wavelength, different from the pump wavelength, of a primary optical field emitted by the gain medium.

The intra-cavity curved refractive surface is spaced apart from the second at least partially reflective surface. In particular, the curved refractive surface may be positioned between the second at least partially reflective surface and the gain material. In some embodiments, the curved refractive surface is a surface of an intra-cavity optical element and the second at least partially reflective surface is a surface of an output coupler element different from the intra-cavity optical element.

As mentioned above, in a preferred embodiment, the laser system comprises a first monolithic optical element, e.g. a first passive or active monolithic optical element, wherein the first monolithic optical element comprises the second at least partially reflective surface and the curved refractive surface, i.e. the second at least partially reflective surface and the curved refractive surface are respective surfaces of the same optical element, such as of the same block of optical material, in particular uniform material. Optionally, one or more surfaces of the block may be coated. In particular, in some embodiments, the first monolithic optical element has a first end surface facing the gain material and a second end surface, opposite the first end surface, facing away from the gain material; wherein the first end surface forms the intra-cavity curved refractive surface, which acts as an intra-cavity lens. The second end surface forms the second at least partially reflective surface, which acts as a mirror. Hence, the lens portion of the monolithic optical element contributes to the overall intra-cavity focal power. Additionally, the intra-cavity lens portion may contribute to the collimation/focusing of the pump beam and/or the output beam. Integrating the intra-cavity curved refractive surface and the second at least partially reflective surface into the same monolithic optical element reduces the number of optical surfaces which leads to lower losses. Moreover, such integration may facilitate the mounting and/or alignment of the components of the cavity. Such integration also makes it possible to design systems where the component-to-component distances are shorter than may otherwise be practically realizable when using multiple separate components. Accordingly a particularly compact yet stable cavity design may be obtained.

The first monolithic optical element may be positioned at an output arm of the resonant cavity, i.e. on a side of the gain material opposite the pump side from which the pump beam enters the resonant cavity and the gain material. In particular, the first monolithic element may be an output coupler.

The first monolithic optical element may be a passive element, e.g. made from glass, sapphire or another suitable transparent material, such as a dielectric material, where the end faces are suitably anti-reflection coated (AR coated) and partially reflective coated (PR coated), respectively. In particular, the curved refractive surface may be AR coated at least for the primary wavelength. In embodiments where the laser system comprises a separate intra-cavity frequency-converting element, the curved refractive surface may further be anti-reflective at the frequency-converted wavelength. The second at least partially reflective surface may be PR coated at least for the wavelength that is to be coupled out of the cavity, in particular the primary wavelength or a frequency-converted wavelength. In embodiments where the laser system comprises a separate intra-cavity frequency-converting element, the second at least partially reflective surface may be highly reflective at the primary wavelength and partially reflective or transmissive at the frequency-converted wavelength. The curved, refractive surface thus acts as a lens while the second partially reflective surface functions as a mirror/output-coupler.

Alternatively, the first monolithic element may be an active optical element, such as a frequency-converting element. The frequency-converting element may be made at least in part from a frequency-converting material configured to convert a primary optical field having a primary wavelength into a frequency-converted optical field having a frequency-converted wavelength different from the primary wavelength. In such an embodiment, the curved refractive surface may be AR coated at least for the primary wavelength and highly reflective at the frequency-converted wavelength; the second at least partially reflective surface may be PR or AR coated at the frequency-converted wavelength and highly reflective at the primary wavelength. The curved, refractive surface thus acts as a lens while the second partially reflective surface functions as a mirror for the primary optical field and as an output-coupler for the frequency converted optical field. The lens portion of the first monolithic element may thus further contribute to the creation of a focal spot inside the active optical element. Accordingly, particularly compact cavity designs are facilitated.

In some embodiments, the laser system comprises an optical pump source configured to direct an optical pump beam having a pump wavelength into the resonant cavity, in particular for optically pumping the gain material so as to cause the gain material to generate the primary optical field. The pump source may be configured to direct the pump beam through the first at least partially reflective surface into the resonant cavity.

The gain material may be configured to emit, in particular responsive to being optically pumped by a pump beam, the primary optical field at at least a primary wavelength, which may be different from the pump wavelength of the pump beam. Examples of suitable primary wavelengths include a primary wavelength in the range 900 nm - 950 nm such as 946 nm, a primary wavelength in the range 1020 nm - 1080 nm such as 1030 nm or 1050 nm or even 1064 nm, or a primary wavelength in the range 1130 nm - 1350 nm such as 1230-1250 nm or 1319 nm or even 1338 nm. Further examples of a primary wavelength include a primary wavelength in the range 2000 nm - 3000 nm such as 2020 nm or 2120 nm or even such as 2940 nm.

The gain material may be any suitable solid-state gain material, in particular a gain crystal and/or glass-based material and/or a fiber-based material. For example, crystal-based gain materials may be in the shape of slabs, rods, blocks, fibers or thin disks. Generally, the gain material may be configured to provide a gain at at least the primary wavelength. Furthermore, the gain material may be configured to sustain the optical power level within the resonant cavity.

In some embodiments, the gain material comprises a rare-earth doped crystal. In some embodiments, the rare-earth doped crystal comprises at least one Nd-doped host material such as Nd:YAG, Nd:YAP, Nd:YVO₄ and/or Nd:GdVO₄. In alternative embodiments, the gain material comprises other suitable gain components and/or other suitable host materials. For example, other suitable gain components include other suitable rare-earth or transition metal dopants, such as Er, Cr, Ho, Yb, Tm or Ti. Other suitable host materials may be glass or crystal materials such as KGW, YLF, Forsterite, LiCAF, ZBLAN, sapphire, or fluoride or silica glasses. Other choices of gain components and host materials are known to the skilled person, e.g. for use at other wavelengths. See for example: W. Koechner, "Solid-State Laser Engineering", Sixth Edition, Springer Inc., 2006.

In some embodiments, the first laser resonator comprises at least one additional gain material. In this way, advantages of different gain materials may be combined within a single laser resonator.

In some embodiments, the gain material is pumped substantially along the optical axis defined by the resonant cavity. In some embodiments, the gain material is end-pumped. In particular, in some embodiments, the gain material has a first end face and a second end face, opposite the first end face, the gain material being configured such that at least a part of the primary optical field between the first and second at least partially reflective surfaces propagates along a direction extending between the first and second end faces, and wherein the pump light source is configured to direct the pump beam into the resonant cavity along a pump direction extending through one or both of the first and second end faces. The pump direction may be substantially parallel to the optical axis of the cavity. End-pumping the gain material in this way is generally more pump efficient than e.g. pumping normal to the optical axis. Nevertheless, in alternative embodiments, the gain material may be side-pumped.

In some embodiments, the pump source comprises one or more laser diodes. Such diodes are both inexpensive, mechanically robust, and are practically maintenance free. In particular, in some embodiments, the one or more laser diodes of a pump source emit(s) a pump beam with a pump wavelength in the range from about 800 nm to about 900 nm, or between 900 nm and 1000nm, such as from about 805 nm to about 815 nm or from about 880 nm to about 890 nm, or even about 808 nm or about 885 nm. In alternative embodiments, the laser system comprises a pump source emitting a pump beam at one or more different pump wavelengths.

Generally, in some embodiments, the laser system comprises a frequency-converting element made at least in part from a frequency-converting material, in particular a nonlinear medium. The frequency-converting element is configured to convert an optical field having a primary wavelength of a primary optical field generated by the gain material into a frequency-converted optical field having a frequency-converted wavelength different from the primary wavelength. Examples of suitable primary wavelengths include a primary wavelength in the range 900 nm - 950 nm such as 946 nm, a primary wavelength in the range 1020 nm - 1080 nm such as 1030 nm or 1050 nm or even 1064 nm, or a primary wavelength in the range 1130 nm - 1350 nm such as 1230-1250 nm or 1319 nm or even 1338 nm. Further examples of a primary wavelength include a primary wavelength in the range 2000 nm - 3000 nm such as 2020 nm or 2120 nm or even such as 2940 nm. Examples of frequency-converted wavelengths include wavelengths in the range 400 nm - 650 nm, such as 570 nm - 610 nm, such as 575 nm - 595 nm, e.g. 415 nm or 515 nm or 532 nm or 585 nm 589 nm or 593 nm or 660 nm or 669 nm or 671 nm. The frequency-converting element may be the first monolithic element as described above, or it may be a different element, in particular an intra-cavity element.

In some embodiments, the frequency converting material comprises at least one nonlinear crystal. In an alternative embodiment, the frequency converting material comprises two, three, or more nonlinear crystals. In this way, problems such as back-conversion of the optical field may be mitigated. In alternative embodiments, the frequency converting material comprises a highly nonlinear fiber.

In some embodiments, the nonlinear crystal is chosen from LBO, BBO, KTP, BiBO periodically poled (PP) LN, or LT. These choices of nonlinear crystals are particular suitable for generation of light in the visible range, e.g. yellow light from infrared light.

The frequency converting material may be configured to cause second harmonic generation (SHG) or another nonlinear interaction of the primary optical field and optionally another optical field, e.g. of another wavelength, e.g. for sum-frequency generation. The other optical field may be the pump beam.

In some embodiments, in particular when the frequency-converting element is provided as an intra-cavity element, the frequency-converting element has a first end surface facing the gain material and a second end surface, opposite the first end surface, facing away from the gain material; wherein the first end face is a curved surface and/or the second end face is a curved surface. Providing the frequency-converting element with one, preferably two, curved surfaces allows creation of a beam waist of the primary optical field inside the frequency converting material. This in turn facilitates a high beam intensity and, hence, a high conversion efficiency. Moreover, in such embodiments, the frequency-converting element may further define the intra-cavity curved refractive surface that is configured for compensation of a thermal lens effect of the gain material. One or both end faces may be suitably coated.

Generally, embodiments of a solid-state laser system may be made compact when the solid-state laser system comprises an active monolithic optical element having a lens portion that does not act as an output coupler of the laser cavity, in particular an intra-cavity curved refractive surface or a curved surface forming an input end of the resoant cavity. Accordingly, embodiments of a solid-state laser system may comprise:
- a first at least partially reflective surface
- an output coupler comprising a second at least partially reflective surface, the first and second at least partially reflective surfaces being configured to define opposite ends of a resonant cavity; wherein the second at least partially reflective surface defines an output end of the resonant cavity;
- an active monolithic optical element comprising the first at least partially reflective curved surface and/or an intra-cavity curved refractive surface.

In particular, the active monolithic element of this embodiment may be a frequency converting element as described herein or it may be a solid-state gain material as described herein. Alternatively, the laser system may comprise a separate solid-state gain material or a separate frequency-converting element positioned inside the resonant cavity.

Accordingly, in some embodiments, the laser system comprises a second monolithic optical element defining the first at least partially reflective surface and/or an intra-cavity curved refractive surface. The second monolithic element may be provided as an additional monolithic element, in addition to the first monolithic element. In other embodiments, the laser system only comprises the first monolithic element or only the second monolithic element. The second monolithic element may be positioned on a pump side of the gain material, i.e. between the gain material and the pump source.

In some embodiments, the second monolithic optical element has a first end surface facing away from the gain material and a second end surface, opposite the first end surface, facing the gain material; the first end surface forming the first at least partially reflective surface. In particular, in some embodiments, the second end surface is anti-reflection coated with a coating that is anti-reflective at a pump wavelength of a pump beam for optically pumping the resonant cavity and at the primary wavelength of the primary optical field generated by the gain material.

The second monolithic element may be a passive optical element or an active optical element, e.g. configured for sum-frequency generation between the pump beam and the primary optical field.

In some embodiments, the second at least partially reflective surface has a largest lateral dimension, e.g. a diameter; and a distance between the curved refractive surface and the second at least partially reflective surface is smaller than 4 times said largest lateral dimension, such as smaller than 3 times the largest lateral dimension. It has turned out that embodiments of the cavity configuration of a laser system described herein are particularly advantageous in compact embodiments where the ratio between the distance between the optical elements and the lateral dimensions of the optical elements are relatively small, such as smaller than 4:1 e.g. smaller than 3:1.

In some embodiments the laser system may comprise an intra-cavity Q-switch. The Q-switch may be any device operable to modulate a quality factor of the laser resonator. It will be appreciated that there are a variety of types of Q-switches, including e.g. active and passive Q-switches and/or Q-switches employing a variety of technologies.

The laser system may comprise further optical components, such as a an aperture, a lens, a mirror, or other passive or active optical components, e.g. for shaping the optical field.

The first at least partially reflective surface may be a curved surface. The first at least partially reflective surface may be a reflective surface of a mirror and/or the second at least partially reflective surface may be a reflective surface of a mirror. Thus, an efficient laser resonator may be achieved, since a wide range of suitable mirrors are available to the skilled person. The mirror may be flat, convex, or concave, depending on e.g. the requirement for beam focusing, to overcome high peak powers, etc. In some embodiments, the first and/or second at least partially reflective surface is/are a grating, such as a fiber Bragg grating or a bulk grating.

For instance, the first and/or second at least partially reflective surface may have a reflectance at the primary and, optionally, the frequency-converted wavelength of at least about 60%, such as at least about 65%, at least about 70%, at least about 75%, or at least about 80%, at least about 85%, or at least about 90%, or even at least about 95%. Such mirrors are readily created by known techniques, and may for example be obtained by coating optically non-absorbing, transparent substrates with multiple layers of dielectric materials such as fluorides and oxides.

At least some embodiments of the laser system according disclosed herein are particularly, though not exclusively, suitable as a medical laser system, e.g. as a dermatological laser system, e.g. for cosmetic skin treatment. Due to the increased focus on appearance today one of the central areas for cosmetic treatments of skin conditions is related to so-called rejuvenation. Skin can be affected by a range of biological and ageing effects, and by environmentally induced damages, such as wrinkles, acne, sun damage, reddening, vascular disorders and scarring. Rejuvenation is the combined area of treating these conditions in order to restore the youthful appearance of the skin. One of the most preferred treatments for skin rejuvenation is light-based treatment, also referred to as photo rejuvenation. Accordingly, in some embodiments, the medical laser system is configured for cosmetic skin treatment, such as for the purely cosmetic treatment of wrinkles or fine lines in skin, removal of freckles, etc. In some embodiments, the cosmetic treatment is photo rejuvenation of skin.

In some embodiments, the medical laser system is configured to irradiate the target skin area by one or more bursts of pulsed laser light, each burst comprising a pulse train of laser pulses, the laser light having one or more wavelength components suitable for heating constituents in the skin. Generally, embodiments of the medical laser system disclosed herein provide an improved treatment, while advantages such as compactness, ease of use, and/or economic benefits of the laser system are maintained.

The present disclosure relates to different aspects, including the laser system described above and in the following, further methods, systems, devices and product means, each yielding one or more of the benefits and advantages described in connection with one or more of the other aspects, and each having one or more embodiments corresponding to the embodiments described in connection with one or more of the other aspects described herein and/or as disclosed in the appended claims.

In particular, another aspect disclosed herein relates to embodiments of a method for manufacturing a solid-state laser system, comprising:
- providing a first at least partially reflective surface;
- providing a second at least partially reflective surface, the first and second at least partially reflective surfaces being configured to define opposite ends of a resonant cavity;
- providing a solid-state gain material positioned inside the resonant cavity so as to generate at least a primary optical field inside the resonant cavity between the first and second at least partially reflective surfaces;
- providing a curved refractive surface positioned inside the resonant cavity so as to cause at least a part of the primary optical field between the first and second at least partially reflective surfaces to propagate through the curved refractive surface, wherein providing the curved refractive surface comprises configuring the curved refractive surface so as to compensate for an effect of a thermal lens in the gain material on the primary optical field inside the resonant cavity.

The configuration may e.g. be based on computer simulations using techniques known as such in the are, e.g. applying the framework for configuring the cavity described in the paper "Multielement stable resonators containing a variable lens" by V. Magni, J. Opt. Soc. Am. A/Vol. 4, No. 10/October 1987. In some embodiments, configuring the curved refractive surface comprises selecting a position of the curved, refractive surface relative to the gain material and/or selecting a radius of curvature of the curved refractive surface.

### Brief description of the drawings

The above and other aspects will be apparent and elucidated from the embodiments described in the following with reference to the drawing in which:
FIGs. 1A and 1B schematically illustrate examples of a solid-state laser system.
FIG. 2 schematically illustrates an embodiment of a solid-state laser system.
FIG. 3 schematically illustrates another embodiment of a solid-state laser system.
FIG. 4 schematically illustrates yet another embodiment of a solid-state laser system.
FIG. 5 schematically illustrates yet another embodiment of a solid-state laser system.
FIG. 6 schematically illustrates an embodiment of a medical laser system including a solid-state laser system of any of FIGs. 2-5 as a laser source.

### Detailed description

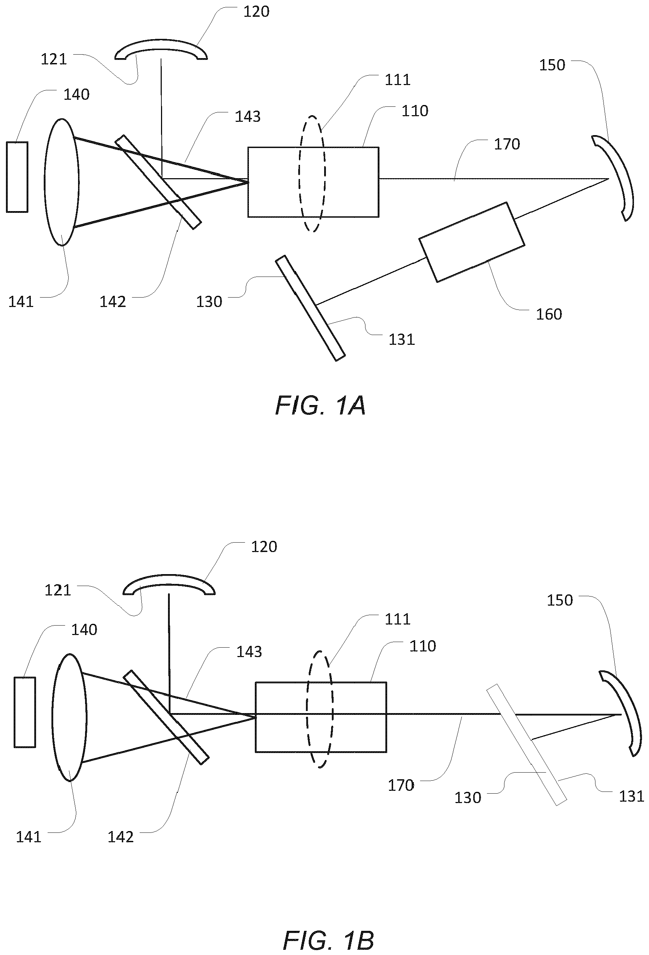

FIGs. 1A and B schematically illustrate examples of a solid-state laser system. The laser system of both examples comprises a first mirror 120 and an output mirror 130 that together define a resonant cavity. The first mirror 120 is a curved mirror having a suitably reflective coating on the surface 121 facing the cavity. The output mirror 130 is a plane, partially reflective mirror that functions as an output coupler. To this end, the surface 131 of the output mirror that faces the cavity is suitably coated. The cavity defines an optical axis 170 that is folded into a general z-shape. To this end, the system comprises two intra-cavity reflectors 142 and 150, respectively. The reflector 142 is partially transparent so as to allow a pump beam 143 to enter the cavity. Reflector 150 is a curved mirror.

The laser system further comprises a gain crystal 110 positioned inside the cavity between the reflector 142 and the reflector 150 such that the reflector 142 redirects the optical field between the gain crystal 110 and the mirror 120 and such that the reflector 150 redirects the optical field between the gain material and the output mirror 130.

The laser system further comprises a pump source comprising a laser diode 140 and a focusing lens 141 that directs a pump beam 143 through the semitransparent mirror 142 onto an end face of the gain crystal 110.

Responsive to the pump beam, the gain crystal emits a primary optical field in both directions along the optical axis 170. The primary optical field thus resonates inside the cavity between the reflective surfaces 121 and 131 of the mirrors 120 and 130, respectively.

The laser system of the example of FIG. 1A further comprises a frequency-converting element 160 comprising a frequency converting material, in this example a nonlinear crystal. The frequency-converting element converts the primary optical field, which has a primary wavelength, into a frequency-converted optical field having a frequency-converted wavelength, different from the primary wavelength. The frequency-converting element is disposed inside the resonant cavity between the redirecting mirror 150 and the output mirror 130. The laser system of the example of FIG. 1B does not comprise such a frequency-converting element.

Generally, during operation of a laser system such as those shown in FIGs. 1A and B, heat gradients are built up inside the gain crystal, which cause the gain crystal to act as a thermal lens. In GIGs. 1A-B and in the following figures, this thermal lens is schematically illustrated as a schematic thermal lens 111 shown in dashed lines.

When designing the cavity configuration of a laser system, it is thus desirable to configure the components of the laser system such that the effect of the thermal lens is compensated for and such that a stable resonant cavity is obtained. To this end, various parameters of the configuration may need to be carefully selected. The parameters to be selected may include the respective curvatures of mirrors 120 and 150, the lengths of the various linear sections of the optical axis (as defined by the relative positions of the mirrors 120, 142, 150 and 130) and the orientation of the curved mirror 150.

Moreover, the cavity configuration should preferably be such that the operation of the laser cavity is mechanically stable, i.e. sufficiently insensitive to small variations in the relative positions and orientations of the various optical components. Yet further, the cavity configuration should preferably be such that the operation of the laser cavity is sufficiently insensitive to changes in certain operational parameters of the laser system, such as to variations of the pump current driving the pump source, variations in the operating temperature, etc.

In order to obtain a stable cavity configuration, it may be desirable to select the distance between e.g. the output mirror and the redirection mirror 150 to be relatively short. However, such a configuration involves certain challenges. For example, it may be geometrically challenging to place the various components relatively to each other such that they do not block the primary optical field. This is schematically illustrated in the example of FIG. 1B where the output mirror 130 is moved so close to the redirecting mirror 150 that it blocks propagation of the optical field between the gain crystal 110 and the redirecting mirror 150. Moreover, in this configuration there may not be sufficient space for a frequency-converting element. Rotating the redirecting mirror 150 so as to increase the angle between the legs of the z-shaped optical axis 170 may allow positioning of the output mirror 130 such that it does not interfere with the optical field between the gain crystal 110 and the redirecting mirror 150. However, this may have other undesirable effects, as it increases the angle at which the optical field impinges the reflecting surface of mirror 150. This in turn may cause undesired optical effects such as an increased astigmatism.

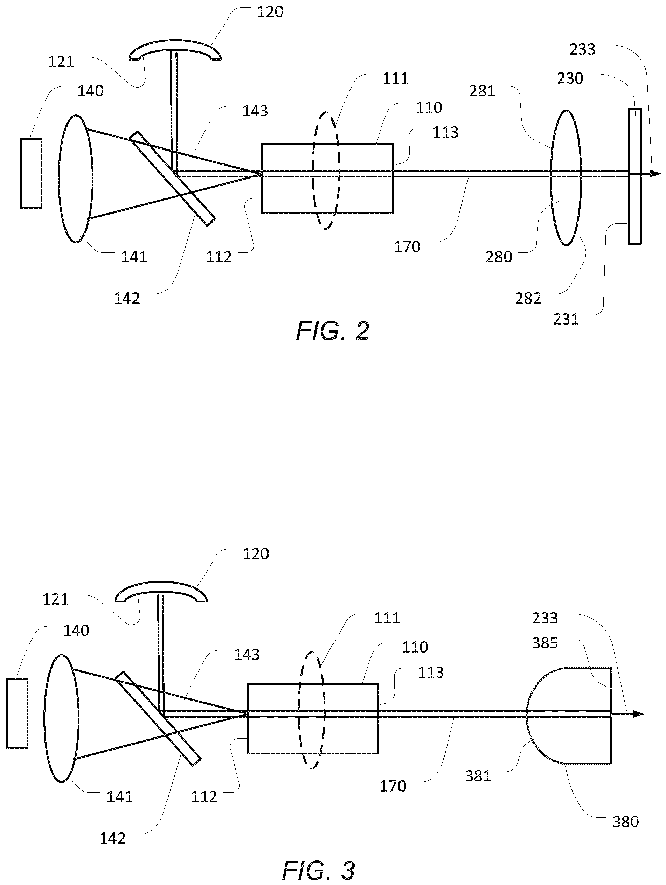

FIG. 2 schematically illustrates an embodiment of a solid-state laser system. The laser system according to this embodiment comprises a first reflective element 120, such as a mirror or grating, and an output coupler 230, such as a partially reflective mirror. The first reflective element 120 and the output coupler together define a resonant cavity. In this embodiment, the first reflective element 120 is a curved mirror having a suitably reflective coating on the curved surface 121 facing the cavity. The output coupler 230 is a plane, partially reflective mirror. To this end, the surface 231 of the output coupler that faces the cavity is suitably coated with a partially reflective coating. The coatings of the first reflective element 120 and the output coupler 230 may comprise one or more optically non-absorbing, transparent substrates with multiple layers of dielectric materials such as fluorides and oxides. The resonant cavity is thus bounded on one side by the reflective surface 121 of the first reflective element 120. The resonant cavity is bounded on a second side, opposite the first side, by the partly reflective surface 231 of the output coupler 230 that is partially reflective and partially transmissive to the primary optical field inside the cavity so as to couple out parts of the primary optical field.

The resonant cavity of this embodiment defines an optical axis 170 that is folded into a general L-shape. To this end, the system comprises an intra-cavity reflector 142. The reflector 142 is partially transparent so as to allow a pump beam 143 to enter the cavity.

The laser system further comprises a gain material 110 positioned inside the resonant cavity, in particular such that the optical axis 170 defined by the resonant cavity extends through the gain material. When optically pumped by a pump beam 143, the gain material generates a primary optical field having a primary wavelength. In the present embodiment, the gain material is positioned between the reflector 142 and the output coupler 230 such that the reflector 142 redirects the generated primary optical field between the gain material 110 and the first reflective element 120. To this end, the reflector 142 may be a dichroic mirror that is reflective at the primary wavelength of the primary optical field emitted by the gain material and transmissive at the pump wavelength of the pump beam 143.

The gain material 110 may be a gain crystal, e.g. in the form of a block or rod having two opposite end faces 112 and 113, respectively, where the gain crystal is positioned inside the cavity such that the cavity optical axis 170 extends through the two end faces. The gain crystal may include Nd:YAG or another suitable gain material. Generally, examples of suitable gain materials include rare-earth doped crystals. In some embodiments, the rare-earth doped crystal comprises at least one Nd-doped host material such as Nd:YAG, Nd:YAP, Nd:YVO₄ and/or Nd:GdVO₄. In alternative embodiments, the gain material comprises other suitable gain components and/or other suitable host materials. For example, other suitable gain components include other suitable rare-earth or transition metal dopants, such as Er, Cr, Ho, Yb, Tm or Ti. Other suitable host materials may be glass or crystal materials such as KGW, YLF, Forsterite, LiCAF, ZBLAN, sapphire, or fluoride or silica glasses. Other choices of gain components and host materials are known to the skilled person, e.g. for use at other wavelengths. See for example: W. Koechner, "Solid-State Laser Engineering", Sixth Edition, Springer Inc., 2006.

The laser system further comprises a pump source. In this example, the pump source comprises a laser diode 140 and a focusing lens 141 or other focusing optics that directs a pump beam 143 through the reflector 142 onto an end face 112 of the gain material 110. To this end, the reflector 142 is transmissive at the pump wavelength of the pump beam. For example, the reflector may be coated, e.g. on the side facing the gain material, with a coating that is highly reflective at the primary wavelength and anti-reflective at the pump wavelength, i.e. the reflector may be a dichroic mirror. For example, the laser diode 140 may emit a pump beam with a pump wavelength in the range from about 800 nm to about 900 nm, or between 900 nm and 1000nm, such as from about 805 nm to about 815 nm or from about 880 nm to about 890 nm, or even about 808 nm or about 885 nm. However, it will be appreciated that other embodiments may use other types of pump sources, e.g. emitting pump beams at different pump wavelengths, pump sources using multiple laser diodes, and/or the like. In some embodiments, the pump source comprises one or more fiber-coupled laser diodes.

Responsive to the pump beam, the gain material 110 emits a primary optical field in both directions along the optical axis. The primary optical field thus resonates inside the cavity between the reflective surfaces 121 and 231 of the reflective element 120 and the output coupler 130, respectively, as illustrated in the figures by a double line indicating the optical axis 170 inside the cavity. The primary optical field has a primary wavelength.

Accordingly, the partially reflective surface 231 of the output coupler 230 is partially reflective at the primary wavelength of the primary optical field generated by the gain material 110. For example, in certain embodiments the reflectance of the partially reflective surface for radiation having the first wavelength is at least about 60%, such as at least about 65% or at least about 70%, or even at least about 75% or at least about 80%, such as at least 95%, such as at least 97%. In some embodiments, the reflectance of the partially reflective surface is below 99.9%, such as below 99.5%, such as below 99%, such as below 98%.

As described above, during operation of the laser system, heat gradients are built up inside the gain, material which cause the gain crystal to act as a thermal lens 111.

The laser system of this embodiment includes an intra-cavity lens 280. In this embodiment, the intra-cavity lens is a passive, transmissive optical element which may be made of a suitable transparent material, such as glass, sapphire or another suitable transparent material, such as dielectric material, having a suitable refractive index. In this example, the lens 280 is a convex lens having two convex refractive surfaces 281 and 282, respectively. It will be appreciated that other embodiments may include other types of lenses, e.g. a concave lens, a lens with only a single curved surface, and/or the like. The intra-cavity lens 280 is positioned between the gain material 110 and the output coupler 230. Generally, the refractive properties of the one or more curved refractive surfaces of the intra-cavity lens and/or the position of the lens 280 relative to the output mirror 280 and/or the gain material 110, may be configured such that the lens, in cooperation with the other optical components of the laser cavity at least partially compensate for the thermal lens effect of the gain material 110. The configuration may e.g. be based on computer simulations using techniques known as such in the art, e.g. applying the framework for configuring the cavity described in the paper "Multielement stable resonators containing a variable lens" by V. Magni, J. Opt. Soc. Am. A/Vol. 4, No. 10/October 1987.

It will be appreciated, that in other embodiments, various modifications may be made compared to the embodiment of FIG. 2. For example, while the optical axis of the cavity of the embodiment of FIG. 2 is folded into a general L-shape, alternative embodiments may include a non-folded, linear optical axis or a folded configuration where the optical axis is folded into a different shape, such as an x-shape or a z-shape. To this end, alternative embodiments may be without any intra-cavity redirecting mirrors; yet alternative embodiments may include one or more additional intra-cavity reflectors for redirecting the primary optical field. Such a redirecting reflector may e.g. be placed between the gain material 110 and the lens 280, or between the lens 280 and the output coupler 230.

Alternatively or additionally, alternative embodiments of the laser system further comprise a frequency-converting element comprising a frequency converting material, in this example a nonlinear crystal. The frequency-converting element converts the primary optical field, which has a primary wavelength, into a frequency-converted optical field having a frequency-converted wavelength, different from the primary wavelength. The frequency-converting element may be disposed inside the resonant cavity, e.g. between the lens 280 and the output coupler 230.

In some embodiments, the frequency converting material comprises at least one nonlinear crystal. In an alternative embodiment, the frequency converting material comprises two, three, or more nonlinear crystals. In this way, problems such as back-conversion of the optical field may be mitigated. In alternative embodiments, the frequency converting material comprises a highly nonlinear fiber. In some embodiments, the nonlinear crystal is chosen from LBO, BBO, KTP, BiBO periodically poled (PP) LN, or LT. These choices of nonlinear crystals are particular suitable for generation of light in the visible range, e.g. yellow light from infrared light. The frequency converting material may be configured to cause second harmonic generation (SHG) or another nonlinear interaction of the primary optical field and optionally another optical field, e.g. of another wavelength, e.g. for sum-frequency generation.

In some embodiments, the frequency-converting element has a first end surface facing the gain material 110 and a second end surface, opposite the first end surface, facing away from the gain material. The first and/or second end faces may be plane or, preferably, curved. Providing the frequency-converting element with one, preferably two, curved surfaces allows creation of a beam waist of the primary optical field inside the frequency converting material. This in turn facilitates a high beam intensity and, hence, a high conversion efficiency. Accordingly, in some embodiments, the intra-cavity lens 280 may be formed as a rod made from a frequency-converting material where one or each of the end faces of the rod is curved (convex or concave). Thus the rod functions as a frequency-converting element and as intra-cavity lens as described herein.

In some embodiments, the partially reflective surface 231 of the output coupler may be highly reflective at least at some wavelengths. For example, in embodiments where the laser system comprises a frequency-converting element, the partially reflective surface 231 may be highly reflective at the primary wavelength and partially reflective or even anti-reflective at the frequency-converted wavelength.

FIG. 3 schematically illustrates another embodiment of a solid-state laser system. The laser system according to this embodiment is similar to the embodiment of FIG. 2 in that it comprises a first reflective element 120, a gain material 110, a partially reflective reflector 142, a pump source including a laser diode 140 and a focusing lens 141, all as described in connection with FIG. 2, optionally including one or more of the optional modifications as also described in connection with FIG. 2.

The embodiment of FIG. 3 differs from the embodiment of FIG. 2 in that the intra-cavity lens and the output coupler are combined into a single element, namely into a first monolithic optical element 380. In this embodiment, the first monolithic element 380 is a passive optical element made from glass, sapphire or another suitable transparent material, in particular dielectric material. The first monolithic element 380 has a plane, reflective surface 385 facing away from the gain material 110 and a curved, refractive surface 381 facing the gain material. The plane, outward facing surface 385 may be suitably coated with a reflective coating that reflects a portion of the primary optical field back into the cavity while allowing a portion of the primary optical field to exit the cavity as an output laser beam 233. Accordingly, the outward facing, reflective surface 385 defines one end of the resonant cavity.

The inward facing curved, refractive surface 381 is thus located inside the resonant cavity and acts as an intra-cavity lens. The curved, refractive surface is preferably coated with a suitable anti-reflective coating, anti-reflective at least at the primary wavelength of the primary optical field generated by the gain material 110. In this example, the curved surface 381 is convex. It will be appreciated that other embodiments may include a monolithic element where the inward facing curved surface is concave. Generally, the refractive properties of the inward-facing, curved refractive surface 381 and/or the dimensions of the first monolithic element 380 and/ or its position relative to the gain material 110 may be configured such that the curved, refractive surface 381, in cooperation with the other optical components of the laser cavity, at least partially compensates for the thermal lens effect of the gain material 110. As in the previous embodiment, the configuration may e.g. be based on computer simulations using techniques known as such in the art.

It will be appreciated, that in other embodiments, various modifications may be made compared to the embodiment of FIG. 3. For example, the outward facing surface of the first monolithic element may be curved, e.g. convex or concave, instead of plane. Similarly, the inwardly facing, curved refractive surface of the first monolithic element may be concave instead of convex. Other possible modifications include the modifications described in connection with FIG. 2, e.g. modifications to the cavity shape, the addition of further optical elements, such as a frequency-converting element, etc. In some embodiments, the outward facing surface 385 may be highly reflective at least at some wavelengths. For example, in embodiments where the laser system comprises a frequency-converting element, the outward facing surface 385 may be highly reflective at the primary wavelength and partially reflective or even anti-reflective at the frequency-converted wavelength.

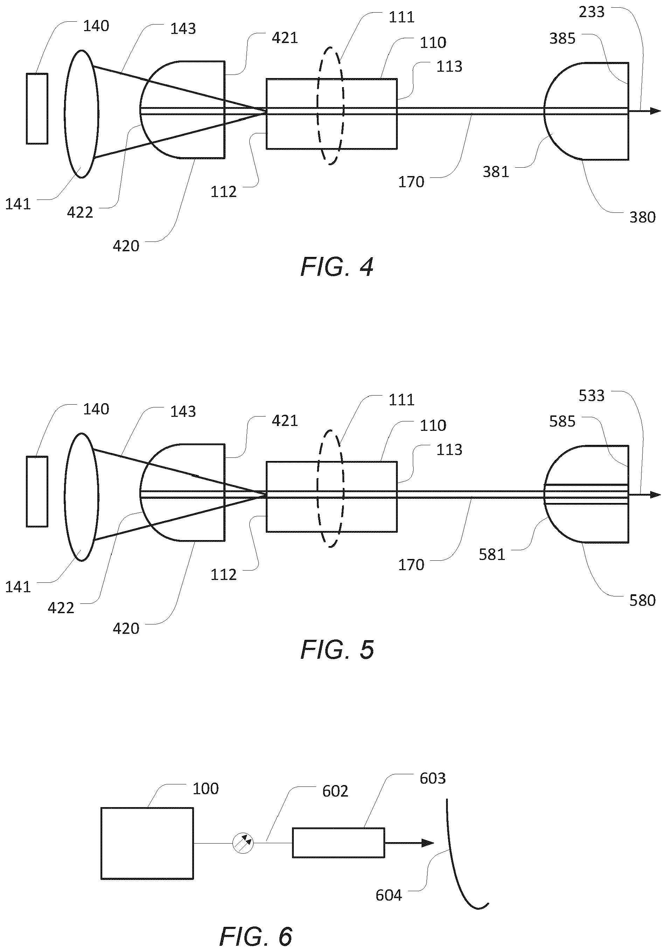

FIG. 4 schematically illustrates yet another embodiment of a solid-state laser system. The laser system according to this embodiment is similar to the embodiment of FIG. 3 in that it comprises a gain material 110, a pump source including a laser diode 140 and a focusing lens 141, and a first monolithic optical element 380 forming a combined output coupler and intra-cavity curved refractive surface, all as described in connection with FIG. 3, optionally including one or more optional modifications as also described in connection with FIG. 3.

The embodiment of FIG. 4 differs from the embodiment of FIG. 3 in that the laser system of FIG. 4 comprises a second monolithic element 420 instead of the reflector 142 and the first reflective element 120 of the embodiment of FIG. 3.

The second monolithic element 420 is positioned such that the gain material is located between the first monolithic element 380 and the second monolithic element 420. In this embodiment, the second monolithic element 420 is a passive optical element made from glass, sapphire or another suitable transparent material, in particular dielectric material. The second monolithic element 420 has a plane surface 421 facing the gain material 110. The plane surface 421 is coated with an anti-reflective coating that is antireflective at the pump wavelength of the pump beam 143 and at the primary wavelength of the primary optical field. The second monolithic element 420 has a curved surface 422 facing away from the gain material 110. In this embodiment the curved surface is convex. The curved surface is coated with a dichroic coating that is highly reflective, e.g. with a reflectance of at least 95.5% such as at least 99%, at the primary wavelength of the primary optical field and that is anti-reflective at the pump wavelength of the pump beam 143. Accordingly, the curved surface acts as a curved mirror for the primary optical field and defines one end of the resonant cavity. Moreover, the curved surface allows the pump beam 143 to be injected into the resonant cavity through the second monolithic element 420.

As is apparent from FIG. 4, the optical axis 170 defined inside the resonant cavity is linear along the entire length of the cavity, i.e. the laser system is very compact and of low complexity.

Generally, the properties of the first and second monolithic elements, including the curvatures of their curved surfaces, their relative positions, etc. may be configured such that the curved, refractive surface 381, in cooperation with the other optical components of the laser cavity, at least partially compensates for the thermal lens effect of the gain material 110. As in the previous embodiment, the configuration may e.g. be based on computer simulations using techniques known as such in the art.

It will be appreciated, that in other embodiments, various modifications may be made compared to the embodiment of FIG. 4. For example, the outward facing surface 422 of the second monolithic element may be plane or concave instead of convex. Similarly, the inward facing surface 421 of the second monolithic element may be curved, e.g. convex or concave, instead of plane. It will further be appreciated, that a monolithic element on the pump side of the gain material may also be provided in the embodiment of FIG. 2, i.e. in combination with an output coupler and a separate intra-cavity lens as in FIG. 2 or even in an embodiment with an output coupler and no intra-cavity lens. Other possible modifications include the modifications described in connection with FIGs. 2 or 3, e.g. modifications to the cavity shape, the addition of further optical elements, such as a frequency-converting element, modifications to the surface shapes of the first monolithic element, etc.

In one embodiment, the second monolithic element may be an active optical element, e.g. configured for sum-frequency generation between the pump beam and the primary optical field.

FIG. 5 schematically illustrates yet another embodiment of a solid-state laser system. The laser system according to this embodiment is similar to the embodiment of FIG. 4 in that it comprises a first monolithic element 580, a second monolithic element 420, a gain material 110 and a pump source, which may comprise a laser diode 140 and a focusing lens 141 or other focusing optics. The gain material, the second monolithic element and the pump source are all as described in connection with FIG. 3. The first monolithic element 580 is also similar to the first monolithic element 380 of FIG. 3, in particular in that it comprises a planar, partially reflective surface 585 that faces away from the gain material and functions as an output coupler of the resonant cavity. The planar, partially reflective surface 585 defines one end of the resonant cavity. The first monolithic element 580 further comprises a curved, refractive surface 581 that is located inside the resonant cavity and that faces the gain material. The curved, refractive surface in this embodiment is convex and anti-reflection coated also as described in connection with FIG. 4. Finally, the system is configured such that the curved, refractive surface, in cooperation with the other optical elements of the resonant cavity, compensates for the thermal lens effect of the gain material, also as described in connection with FIG. 4.

The first monolithic element 580 of this embodiment differs from the first monolithic element 380 of FIG. 3 in that the first monolithic element 580 of this embodiment is an active element. In particular, in this embodiment, the first monolithic element 580 is made from a frequency-converting material and configured to convert the primary optical field into a frequency-converted optical field having a frequency-converted wavelength different from the primary wavelength.

In particular, the frequency converting material may comprise at least one nonlinear crystal. The nonlinear crystal may be chosen from LBO, BBO, KTP, BiBO periodically poled (PP) LN, or LT. These choices of nonlinear crystals are particular suitable for generation of light in the visible range, e.g. yellow light from infrared light. The frequency converting material may be configured to cause second harmonic generation (SHG) or another nonlinear interaction of the primary optical field and optionally another optical field, e.g. of another wavelength, e.g. for sum-frequency generation. Accordingly, the curved, refractive surface 581 is coated such that it is highly reflective at the frequency-converted wavelength and anti-reflective at the primary wavelength, so as to allow the primary optical field to enter the frequency-converting material and so as to prevent the frequency-converted optical field to be scattered back into the gain material. The planar, outward facing surface 585 is partially reflective at the frequency converted wavelength and highly reflective at the primary wavelength. Accordingly, the planar surface allows a portion of the frequency-converted optical field to be mitted as an output beam 533 of the resonant cavity. The planar surface 585 thus defines one end of the resonant cavity for the primary optical field, and the curved refractive surface acts as a lens for the primary optical field and as a curved mirror for the frequency-converted optical field. Inside the frequency-converting material both the primary and the frequency-converted optical fields propagate back and fort, as is schematically indicated by the four lines 517 in FIG. 5.

It will be appreciated, that in other embodiments, various modifications may be made compared to the embodiment of FIG. 5. For example, a monolithic element made from a frequency-converting material may also be provided in the embodiment of FIG. 3, i.e. in combination with a partially reflective element 142 and a reflective element 120 as shown in FIG. 3, instead of in combination with a second monolithic element. Other possible modifications include the modifications described in connection with FIGs. 2 - 4, e.g. modifications to the cavity shape, the addition of further optical elements, such as a frequency-converting element, modifications to the surface shapes of the first and/or second monolithic elements, etc.

As mentioned above, in general, several modifications may be made to the various embodiments described above, e.g. by providing folded cavity configurations, by providing one or more further active or passive optical components, such as one or more frequency converting elements, one or more additional gain media, one or Q-switches, one or more reflectors, one or more apertures and/or the like.

In some embodiments, the laser system may comprise more than one resonant cavity. The cavities may partially overlap, i.e. share at least a part of the resonant cavity. Alternatively or additionally, the light from two or more cavities may be combined by a suitable beam combiner. The cavities may be configured to emit optical fields at respective wavelengths. The laser system may further comprise one or more nonlinear media for providing nonlinear interaction between the optical fields of different wavelengths, e.g. by sum-frequency generation.

Generally, at least some embodiments of a laser system may include additional components, such as one or more of the following: an electrical power supply, a laser control circuit, a heater, a cooler, one or more filters, a shutter, an RF-generator, an electro-optical modulator and/or the like.

Generally, the laser system may further comprise a control circuit for controlling the various components of the laser system. In particular, the control circuit may be operable to control operation of the pump source and, optionally, to generate a trigger signal for triggering an optional Q-switch. The control circuit may at least in part be implemented by a suitable microprocessor, as a phase-locked loop component, an FPGA, and CPLD and/or the like. The control circuit may be implemented as a single functional block or as multiple functional blocks.

It will further be appreciated that, depending on the intended application, embodiments of the laser system may include additional or alternative components. For example, a medical laser system may include a hand-held radiation deliver device, e.g. as described in connection with FIG. 6 below. Some examples of a medical laser system may include a mechanical or other type of shutter or exposure control element. It will further be understood that some embodiments of the medical laser system may include further optical elements such as lenses, beam redirecting elements, filters, etc. all conventional in the art.

FIG. 6 schematically illustrates an embodiment of a medical laser system. The system comprises a laser source 100, e.g. an embodiment of the laser system as described in connection with any of FIGs. 2-5. The laser system further comprises an optical fiber 602 or other beam delivery device and a hand-held radiation delivery device 603. The optical fiber 602 has a radiation-receiving end that is coupled to an output port of the laser source and configured to receive radiation from the laser source. The optical fiber has a radiation delivery end that is coupled to the hand-held delivery device. The hand-held delivery device thus receives laser light from the laser source via the optical fiber and irradiates a user-selectable target area 604 with the received laser light.

In the apparatus claims enumerating several means, several of these means can be embodied by one and the same element, component or item of hardware. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, elements, steps or components but does not preclude the presence or addition of one or more other features, elements, steps, components or groups thereof.

## Claims

1. A solid-state laser system, comprising:
- a first at least partially reflective surface;
- a second at least partially reflective surface, the first and second at least partially reflective surfaces being configured to define opposite ends of a resonant cavity;
- a solid-state gain material positioned inside the resonant cavity so as to generate at least a primary optical field inside the resonant cavity between the first and second at least partially reflective surfaces;
- a curved refractive surface positioned inside the resonant cavity so as to cause at least a part of the primary optical field between the first and second at least partially reflective surfaces to propagate through the curved refractive surface.

2. A solid-state laser system according to claim 1, comprising a first monolithic optical element, wherein the first monolithic optical element comprises the second at least partially reflective surface and the curved surface.

3. A solid-state laser system according to claim 2, wherein the first monolithic optical element has a first end surface facing the gain material and a second end surface, opposite the first end surface, facing away from the gain material; wherein the first end surface forms the curved refractive surface and the second end surface forms the second at least partially reflective surface.

4. A solid-state laser system according to claim 2 or 3; wherein the first monolithic optical element is a frequency-converting element made at least in part from a frequency-converting material configured to convert an optical field having a primary wavelength of the primary optical field into a frequency converted optical field having a frequency-converted wavelength different from the primary wavelength.

5. A solid-state laser system according to any of claims 1 through 3, comprising a frequency-converting element made at least in part from a frequency converting material configured to convert an optical field having a primary wavelength of the primary optical field into a frequency converted optical field having a frequency-converted wavelength different from the primary wavelength.

6. A solid-state laser system according to claim 4 or 5; wherein the frequency converting material is a non-linear material, in particular a non-linear crystal.

7. A solid-state laser system according to any one of claims 4 through 6; wherein the frequency-converting element is configured to perform second harmonic generation.

8. A solid-state laser system according to any one of claims 4 through 6; wherein the frequency-converting element is configured to perform sum frequency generation, in particular of the pump beam and the primary optical field.

9. A solid-state laser system according to any one of claims 4 through 8; wherein the frequency-converting element has a first end surface facing the gain material and a second end surface, opposite the first end surface, facing away from the gain material; wherein the first end face is a curved surface and/or the second end face is a curved surface.

10. A solid-state laser system according to any of the preceding claims, wherein the second at least partially reflective surface has a largest lateral dimension; and wherein a distance between the curved refractive surface and the second at least partially reflective surface is smaller than 4 times said largest lateral dimension, such as smaller than 3 times the largest lateral dimension.

11. A solid-state laser system according to any of the preceding claims, comprising a second monolithic optical element defining the first at least partially reflective surface.

12. A solid-state laser system according to claim 11, wherein the second monolithic optical element has a first end surface facing away from the gain material and a second end surface, opposite the first end surface, facing the gain material; the first end surface forming the first at least partially reflective surface.

13. A solid-state laser system according to any of the preceding claims, wherein the first at least partially reflective surface is coated with a coating that is anti-reflective at a pump wavelength of a pump beam for optically pumping the resonant cavity and reflective at a primary wavelength of the primary optical field.

14. A medical laser system comprising the laser system of any one of preceding claims.

15. A method of manufacturing a solid-state laser system, comprising:
- providing a first at least partially reflective surface;
- providing a second at least partially reflective surface, the first and second at least partially reflective surfaces being configured to define opposite ends of a resonant cavity;
- providing a solid-state gain material positioned inside the resonant cavity so as to generate at least a primary optical field inside the resonant cavity between the first and second at least partially reflective surfaces;
- providing a curved refractive surface positioned inside the resonant cavity so as to cause at least a part of the primary optical field between the first and second at least partially reflective surfaces to propagate through the curved refractive surface, wherein providing the curved refractive surface comprises configuring the curved, refractive surface so as to compensate for an effect of a thermal lens in the gain material on the primary optical field inside the resonant cavity.

16. A solid-state laser system comprising:
- a first at least partially reflective surface;
- an output coupler comprising a second at least partially reflective surface, the first and second at least partially reflective surfaces being configured to define opposite ends of a resonant cavity; wherein the second at least partially reflective surface defines an output end of the resonant cavity;
- an active monolithic optical element comprising the first at least partially reflective curved surface and/or an intra-cavity curved refractive surface.
